# EUROPEAN PATENT SPECIFICATION

(11) **EP 1 847 075 B1**
(45) Date of publication and mention of the grant of the patent: **29.02.2012**
(21) Application number: 05823623.3
(22) Date of filing: 19.12.2005
(51) Int. Cl.: H04L 12/56

(54) **ATM NETWORK AND METHOD OF OPERATING THEREOF**
ATM NETZWERK UND BETRIEBSVERFAHREN DAFÜR
RESEAU ATM ET SON PROCEDE D'EXPLOITATION

(30) Priority: 03.02.2005 GB 0502215
(43) Date of publication of application: 24.10.2007
(73) Proprietor: Ericsson AB, 164 80 Stockholm (SE)
(72) Inventor: NIELSEN, Per Kronberg, 71409 Schwaikheim (DE)
(74) Representative: Stasiewski, Piotr Grzegorz
(86) International application number: PCT/EP2005/056912
(87) International publication number: WO 2006/081899

(56) References cited:
- US-B1- 6 700 874
- HAAS R ET AL: "PNNI Augmented Routing (PAR) and Proxy-PAR" COMPUTER NETWORKS, ELSEVIER SCIENCE PUBLISHERS B.V., AMSTERDAM, NL, vol. 34, no. 3, September 2000 (2000-09), pages 399-418, XP004304729 ISSN: 1389-1286
- DROZ/T PRZYGIENDA IBM CORP /BELL LABS P ET AL: "Proxy PAR; draft-ietf-ion-proxypar-arch-01.txt;" IETF STANDARD-WORKING-DRAFT, INTERNET ENGINEERING TASK FORCE, IETF, CH, vol. ion, no. 1, 15 February 1999 (1999-02-15), XP015019785 ISSN: 0000-0004

## Description

### Field of the Invention

The present invention relates to telecommunication and data networks in general, and in particular, the present invention relates to ATM networks supporting Private Network - Network Interface protocol.

### Background of the Invention

Asynchronous Transfer Mode (ATM) is a telecommunications protocol defining packet-based transfer of information. ATM is also described as a connection-oriented system. In practice it means that a connection between points must be made prior to transfer. The path between communicating devices must also be established prior to transfer. ATM based networks allow for transferring network traffic, including voice, video, data and multimedia, at high speed. The network traffic is transferred within an ATM based network in the form of a packet called cell. The size of cell used in ATM networks is constant and equals 53 bytes, of which 5 bytes is allocated for headers and remaining 48 bytes for payload. The advantage of the small cell size is that ATM based networks are able to transmit video, audio, multimedia and computer data over the same network without the risk of blocking-up the line. Once a connection is established the bandwidth can be used entirely for data transport since the ATM network associates each cell with the virtual connection between origin and destination. This can be a virtual channel or virtual path. Since ATM is connection-oriented system and the cells are not used for establishing the connection and maintaining it and also cells do not contain the address of the destination, but only a virtual circuit identifier that distinguishes among many other virtual circuits sharing a link, the cells can have such a short header space (5 bytes).

The Asynchronous Transfer Mode Forum has defined a specification called Private Network-Network Interface also known as Private Node-Node Interface (PNNI) for routing connections in an ATM network. PNNI is both a routing and a signalling protocol defined for the purpose of building highly scaleable, highly resilient ATM switching networks. ATM routing is used to distribute information about the topology of the ATM network and reachability of an ATM address/device. The PNNI protocol consists of two components: routing protocol and signalling protocol. The first component - routing protocol - enables switches to automatically discover the topology and the characteristics of the links interconnecting the switches (i.e. allows for determining the path for routing call requests through the ATM network). The PNNI routing protocol allows for exchanging the hierarchical network topology between nodes. The second component is used to relay ATM connection requests within a network for point-to-point and point-to-multipoint connections (i.e. is responsible for establishing the ATM connection on the path determined by the routing protocol). The signalling protocol also handles functions such as soft Permanent Virtual Connections (SPVCs) and crankback indications.

Configuration and maintenance of routing tables in network nodes can be done either by implemented PNNI functions or manually by a network engineer. Without PNNI functionality implemented in the ATM node the operation of the network will get very complex and is very error prone and increases operation cost because on every node the connections must be manually configured. The problem becomes acute in big networks comprising tens or hundreds of ATM nodes. In ATM network the trend is to push the nodes towards the access. Therefore the nodes get smaller and smaller. Implementing complex protocols as PNNI into ATM switches increases the complexity and cost per node. The problem with implementing PNNI in every ATM switch is that ATM switches are relatively simple, but if implementation of PNNI into an ATM switch is required the resulting technical solution will be complex and expensive.

There are known documents related to routing control using PNNI protocol, namely US6700874B1 and to using Integrated Local Management Interface functions, namely Haas R. et al: "PNNI Augmented Routing (PAR) and Proxy-PAR" Computer Networks, Elsevier Science Publishers B.V., Amsterdam, N1, vol. 34, no. 3, September 2000 (2000-09), pages 399-418, XP004304729 ISSN: 1389-1286. However operations as in the invention now to be described are neither disclosed nor suggested in these prior art documents.

What is desired, is an apparatus and method that allows for providing PNNI functionalities to ATM networks in a simple and inexpensive manner that avoids disadvantages of prior art solutions.

### Summary of the Invention

Accordingly, the invention seeks to preferably mitigate, alleviate or eliminate one or more of the disadvantages mentioned above singly or in any combination.

According to a first aspect of the present invention there is provided an Asynchronous Transfer Mode network as claimed in claim 1.

According to a second aspect of the present invention there is provided a network element for use in an ATM network as claimed in claim 12.

According to a third aspect of the present invention there is provided a method of operating an ATM network as claimed in claim 22.

Further aspects of the present invention are as claimed in the dependent claims.

The present invention beneficially allows for deploying cost effective networks based on reliable ATM technology with full support of PNNI protocol. The present invention allows for deployment PNNI support in ATM networks, which originally do not support PNNI protocol. This is especially beneficial in case of small networks, which grow and become more complicated and more difficult to manage with deployment of new ATM nodes. The nodes of the network according to the present invention act as fully compliant ATM switches. The present invention further ensures interoperability by inserting proven protocols.

### Brief description of the drawings

The present invention will be understood and appreciated more fully from the following detailed description taken in conjunction with the drawings in which:
FIG. 1 is a diagram illustrating an ATM network in accordance with one embodiment of the present invention;
FIG. 2 is a diagram illustrating an ATM network in accordance with one embodiment of the present invention;

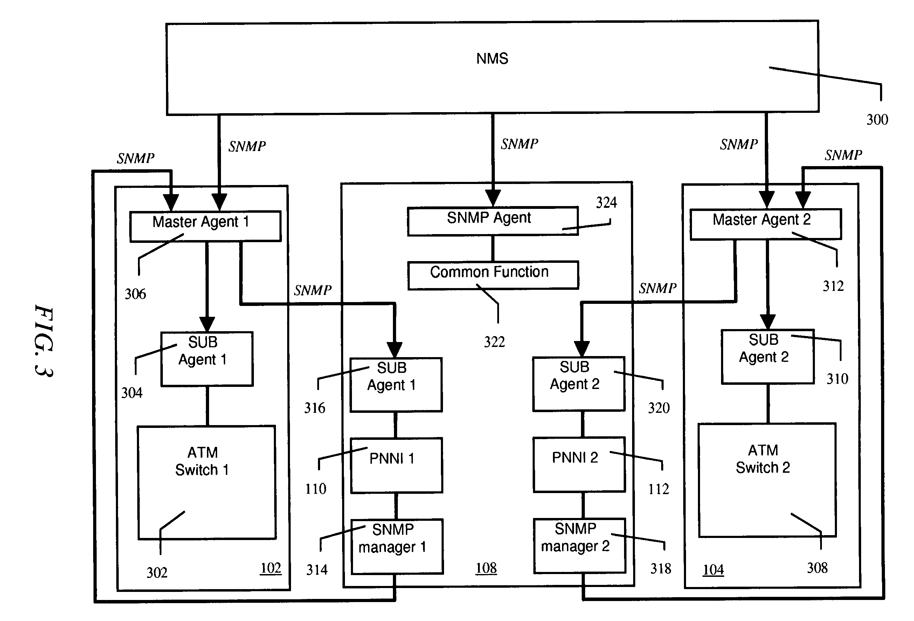

FIG. 3 is a diagram illustrating an ATM network management in accordance with one embodiment of the present invention;
FIG. 4 is a diagram illustrating a Network Element in accordance with one embodiment of the present invention.

### Description of an embodiment of the invention

The term "in-band connection" herein below refers to the path from the network element to the ATM switches, which uses connections through the existing transport network

The term "out-band connection" herein below refers to a Data Communication Network DCN common with existing network management network.

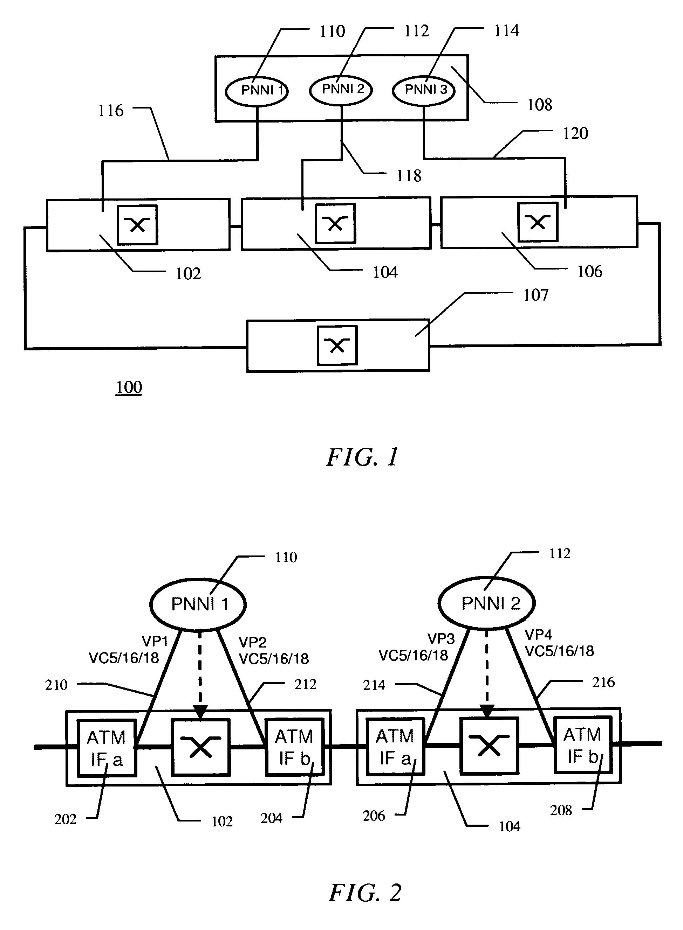

Referring to FIG. 1 one embodiment of an ATM network according to the present invention is illustrated.

In the embodiment of FIG. 1 the ATM network 100 comprises a group of ATM nodes 102 - 107 and a Network Element 108. Said ATM nodes 102 - 107 comprise ATM switches 302, 308. In one embodiment said network element 108 is connected to a portion of said ATM nodes 102 - 106. However, in alternative embodiments the newtork element may be connected to all ATM swiches of the ATM network 100. The Network Element 108 is a proxy PNNI node and is adapted to carry out signalling and routing in accordance with Private Network - Network Interface protocol for every one of said ATM nodes 102 - 106 connected to said Network Element 108. The proxy PNNI node (or the Network Element 108) acts as a PNNI instance per ATM node and therefore reduces the complexity per ATM node. The configuration as illustrated in FIG. 1 and described above allows for building ATM networks with ATM nodes, which operate like regular ATM compliant switches supporting PNNI protocol, but the PNNI functionality, and specialized hardware and software providing PNNI, is not built-in in any one of said ATM nodes connected to the Network Element 108. The ATM nodes 102 - 106 still perform switching, however the PNNI signalling and routing is overtaken by the Network Element 108.

Reference is now made to FIG. 2. The Network Element 108 is connected to the ATM nodes 102 - 106 in-band or out-band by means of a Virtual Paths (VP). Every ATM node 102 - 106 is represented in the Network Element 108 in one separate PNNI instance 110 - 114. One PNNI instance has one routing domain. Within the routing domain a routing table for this specific ATM node is stored. The routing domain ensures that no routing is performed internally in the Network Element 108 between two ATM nodes 102 - 106. The signalling interface 202, 204 of the first ATM node 102 is also represented as signalling interface in the PNNI instance on the Network Element 108. Every ATM node 102 - 106 is connected by a separate VP to the Network Element 108. In alternative embodiments redundant VPs may be added for connecting the ATM nodes 102 - 106 and the Network Element 108 to ensure operability in case of connection failure.

In alternative embodiments every physical interface 202 - 208 may have more signalling VP, which are also represented in the Network Element 108. Every VP 210 - 214 is represented in the Network Element 108 in a form of appropriate routing entry in the routing table for the relevant ATM node. Similarly every VP 210 - 214 is represented by separate signalling entries in the signalling table for the relevant ATM node.

In a preferred embodiment the Network Element 108 is also adapted to carry out functions of Integrated Local Management Interface (ILMI) and ATM Inter-Network Interface (AINI) for the ATM nodes 102 - 106 connected to said Network Element 108. In a preferred embodiment PNNI, AINI and ILMI functions reside on the Network Element 108. It is enough to have one ILMI and one AINI instance residing on the Network Element 108 to serve all the ATM nodes 102 - 106 connected to said Network Element 108. However in alternative embodiments more than one ILMI and/or AINI instance may reside on the Network Element 108.

In yet another embodiment the ILM and/or AINI functions may reside on the ATM nodes and the PNNI on said Network Element 108.

The communication between the Network Element 108 and the ATM nodes 102 - 106 connected to the network element is carried out via Simple Network Management Protocol. It is envisaged, however, that other protocols may be implemented in order to provide efficient communications between the Network Element 108 and the ATM nodes 102 - 106. Alternatively said communication between the Network Element 108 and the ATM nodes can be carried out via Corba or QD2 protocols.

As it is well known in the art the ATM networks are connection-oriented. It means that a virtual channel (VC) must be set up across the ATM network prior to data transfer. There are two types of ATM connections defined in ATM standard: Virtual paths (VP) and virtual channels (VC). A virtual path is a bundle of virtual channels. Virtual paths are identified by virtual path identifiers (VPI). Virtual channels are identified by a combination of a VPI and a virtual channel identifier (VCI).

PNNI and ILMI operate over reserved virtual channel connections (VCC), defined by a combination of VPI and VCI. Therefore for signalling VCI=5, for routing VCI=18 and for ILMI VCI=16 are reserved in every VP (i.e. VPI=X), which must provide routing and signalling. To simulate that the Network Element 108 has signalling, routing and ILMI the VC 5, 16 and 18 of each signalling VP 210 - 214 must be switched through the ATM nodes 102 - 106 to the Network Element 108.

In operation, the signalling VPs (VP1 210 and VP2 212) on the interfaces 202 and 204 containing respective VCs are packed in a common VP back to the Network Element 108 and terminated on the PNNI instance 110.

From the network point of view, e.g. the Network Management System (NMS), the ATM nodes 102 - 106 look like an ATM Forum compliant ATM nodes with complete signalling and routing functionality for any neighbour switch/node. A neighbour to the ATM node is any external node supporting PNNI or AINI and connected to a physical interface of the ATM node. The ATM nodes can be clustered in one or more groups and can even be completely separated through the ATM network. It is worth to note that only those VPs, which are intended to provide signalling, must have AINI, PNNI and ILMI on their interfaces.

In operation, the Network Element 108 carries out the PNNI and ILMI functions of one of said connected ATM nodes 102 - 106 at a time. Once the job is done the Network Element 108 switches to another ATM node and repeats the operation. All the ATM nodes 102 - 106 connected to the Network Element 108 are served in a round-robin fashion. The order in which the ATM nodes are served by the network element is predefined in a dedicated table. It is envisaged, however, that alternative scenarios of allocating time periods for serving the ATM nodes 102 - 106 by the Network Element 108 are possible.

The Network Management System (NMS) 300 issues all network relevant set-up commands via SNMP to the first ATM node 102. The entity responsible for communication with the NMS 300 within the first ATM node 102 is a first SNMP master agent 306. The first SNMP master agent 306 relays protocol relevant SNMP commands to a first subagent 316 of the Network Element 108. The same is shown on FIG. 2 by the dotted line. Depending on the information in the first PNNI instance 110 the Network Element 108 issues one or more SNMP commands through a first SNMP manager 314 to the first ATM node's Master agent 306. These SNMP commands get in to the first ATM switch 302 through the first subagent 304 and, for example, set up connections on the first ATM switch 302. The supervision and control of the Network Element 108 is carried out through the local SNMP agent 324 and the Common Function Module 322. The Common Function Module 322 is responsible for supervising the hardware and software modules within the Network Element 108. If an error occurs in the Network Element 108 then the error will be reported by the Common Function Module 322 through the SNMP Agent 324 to the NMS 300. Common parameters such as IP addresses can also be set in the Common Function Module 322.

Once configuration of the first ATM node is completed a second PNNI instance 112 of the Network Element 108 starts to carry out configuration (e.g. setting up connections on the second ATM switch 308) of the remaining nodes 104 - 106.

The Network Management System (NMS) 300 issues all network relevant set-up commands via SNMP to the second ATM node 104. The entity responsible for communication with the NMS 300 within the second ATM node 104 is a second SNMP master agent 312. The second SNMP master agent 312 relays protocol relevant SNMP commands to a second subagent 320 of the Network Element 108. The same is shown on FIG. 2 by the dotted line. Depending on the information in the second PNNI instance 112 the Network Element 108 issues one or more SNMP commands through a second SNMP manager 318 to the second Master Agent 312 of the second ATM node 104. These SNMP commands get in to the second ATM switch 308 through the second subagent 310 and, for example, set up connections on the second ATM switch 308.

This network management setup ensures that the ATM nodes 102-104 act as ATM forum compliant ATM switches.

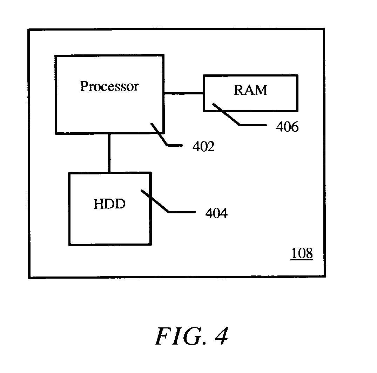

The reference is now made to FIG. 4. With a great simplification the Network Element 108 is shown from the hardware point of view.

The Network Element 108 a processing unit 402, a mass memory 404 and a Random Access Memory (RAM) 406. In one embodiment the mass memory 404 can be a hard disk drive, but memory storage devices like Compact Flash, Secure Digital, MultMedia Card and others can be also used. Similarly the RAM memory can be static RAM (SRAM), dynamic RAM (DRAM), double data rate synchronous dynamic random access memory (DDR SDRAM) or any other type of read/write RAM. In said mass memory 404 data representing every PNNI, ILMI and AINI instances residing on said Network Element 108 is stored.

In operation, to start carrying out PNNI, ILMI and AINI functionalities for the first ATM node 102 the processing unit 402 clears the RAM memory 406. Next the processing unit 402 loads to said RAM memory 406 from said mass memory 404 data representing the PNNI, ILMI and AINI instances of the first ATM node 102. Once the correct data is loaded to said RAM memory 406 a complete set of PNNI, ILMI and AINI instances is created for said first ATM node 102. Then the Network Element 108 starts carrying the PNNI, ILMI and AINI functions for said first ATM node 102.

The invention can be implemented in any suitable form including hardware, software, software embedded in hardware or any combination of these. The functionality defined in the present invention may be implemented in a plurality of units or as part of other functional units. In consequence, the invention may be physically and functionally distributed between different units and processors.

## Claims

1. An Asynchronous Transfer Mode, ATM, network (100) comprising at least one ATM node (102 - 106) and at least one network element (108), wherein said network element is adapted to carry out for said ATM nodes (102 - 106) signalling and routing in accordance with Private Network - Network Interface, PNNI, protocol and Integrated Local Management Interface, ILMI, functions, **characterized in that** said network element (108) is adapted to allocate a separate time period for every one of said ATM nodes (102 - 106) connected to said network element (108) and to carry out said signalling and routing for every one of said connected ATM nodes (102 - 106) during said allocated time periods.

2. The network (100) according to claim 1, wherein said network element (108) is further adapted to carry out ATM Inter-Network Interface, AINI, functions for said ATM nodes (102 - 106).

3. The network (100) according to claim 1 or claim 2, wherein said network element (108) is connected to said ATM nodes (102 - 106) and every one of said ATM nodes (102 - 106) is connected to said network element by means of at least one virtual path (116 - 120).

4. The network (100) according to claim 3, wherein said connection (116 - 120) is an in-band connection.

5. The network (100) according to claim 3, wherein said connection (116 - 120) is an out-band connection.

6. The network (100) according to claim 1, wherein said network element (108) is further adapted to carry out ILMI functions for every one of said connected ATM nodes (102 - 106) during said allocated time periods.

7. The network (100) according to claim 1 or claim 6, wherein said network element (108) is further adapted to carry out AINI functions for every one of said connected ATM nodes (102 - 106) during said allocated time periods.

8. The network (100) according to any one of preceding claims, wherein the network element (108) comprises one PN1VI instance (110 - 114) per one ATM node.

9. The network (100) according to claim 8, wherein said one PNNI instance comprises one routing table and one table storing signalling entries representing virtual paths for said one ATM node (102 - 106).

10. The network (100) according to any one of preceding claims adapted to carry out communication between said network element (108) and said ATM nodes (102 - 106) via Simple Network Management Protocol, SNMP or Corba protocol or QD2 protocol.

11. The network (100) according to any one of preceding claims, wherein said ATM nodes (102 - 107) comprise ATM switches (302, 308).

12. A network element (108) for use in an Asynchronous Transfer Mode, ATM, network (100) comprising means for supervising and control (322, 324) of said network Element (108), wherein said network element (108) is adapted to carry out for ATM nodes (102 - 106) of said ATM network (100) signalling and routing in accordance with Private Network - Network Interface, PNNI, protocol and Integrated Local Management Interface, ILMI, functions and further **characterized** to be adapted to allocate a separate time period for every one of said ATM nodes (102 - 106) connected to said network element (108) and to carry out said signalling and routing for every one of said connected ATM nodes (102 - 106) during said allocated time periods.

13. The network element (108) according to claim 12 further adapted to carry out ATM Inter-Network Interface, AINI, functions for said ATM nodes (102 - 106).

14. The network element (108) according to claim 12 or claim 13 adapted to set up connections (116 - 120) to said ATM nodes (102 - 106), wherein every one of said ATM nodes (102 - 106) is connected to said network element by means of at least one virtual path.

15. The network element (108) according to claim 14, wherein said connection (116 - 120) is an in-band connection.

16. The network element (108) according to claim 14, wherein said connection (116 - 120) is an out-band connection.

17. The network element (108) according to claim 12 further adapted to carry out ILMI functions for every one of said connected ATM nodes (102 - 106) during said allocated time periods.

18. The network element (108) according to claim 12 further adapted to carry out AINI functions for every one of said connected ATM nodes (102 - 106) during said allocated time periods.

19. The network element (108) according to any one claims 12 to 18 comprising one PNNI instance (110 - 114) per one ATM node.

20. The network element (108) according to claim 19, wherein one PNNI, instance (110 - 114) comprises one routing table and one table storing signalling entries representing virtual paths for said one ATM node.

21. The network element (108) according to any one of claims 12 to 20 adapted to carry out communication with said ATM nodes (102 - 106) via SNMP protocol or Corba protocol or QD2 protocol.

22. A method of operating an Asynchronous Transfer Mode, ATM, network (100) comprising at least one ATM node (102 - 106) and at least one network element (108) and said network element comprises one Private Network - Network Interface, PNNI, instance (110 - 114) with one routing table and one table storing signalling entries representing virtual paths for every one ATM node (102 - 106) connected to said network element (108) by means of a virtual path (116 - 120), said method comprises the following steps:
• switching a virtual channel VC5 from a first ATM node (102) to said network element (108);
• switching virtual channels VC16 and VC18 from said first ATM node (102) to said network element (108);
• determining status of neighbour ATM nodes (104) at the other end of a physical link from said first ATM node (102) to said neighbour ATM nodes (104) and to negotiate a common set of operational parameters in accordance with Integrated Local Management Interface, ILMI, protocol;
• carrying out signalling and routing for said first ATM node (102) by a first PNNI instance (110) of said network element (108), wherein said first PNNI instance (110) is assigned to said first ATM node (102), wherein a separate time period is allocated for every one of said ATM nodes connected to said network element and said signalling and routing is carried out for every one of said connected ATM nodes during said allocated time periods;
• terminating connection of a virtual channels VC5 and VC18 between said first ATM node (102) and said network element (108).

23. The method according to claim 22 further comprising the step of carrying out ATM Inter-Network Interface, AINI, functions for said first ATM node (102) by said network element.

24. The method according to claim 22 or claim 23, wherein said steps are repeated for every one of said ATM nodes connected to said Network Element (108) in a round-robin fashion.

25. The method according to any one of claims 22 to 24, wherein communication between said network element (108) and said first ATM (102) switch is carried out via Simple Network Management Protocol, SNMP protocol or Corba protocol or QD2 protocol.

26. The method according any one of claims 22 to 24, wherein said steps are repeated for every one of said ATM nodes (102 - 106) connected to said network element (108).

## Patentansprüche

1. Netz (100) mit asynchronem Transfermodus ATM, umfassend mindestens einen ATM-Knoten (102-106) und mindestens ein Netzelement (108), wobei das Netzelement so ausgelegt ist, das es für die ATM-Knoten (102-106) Signalisierung und Leitweglenkung gemäß dem Privatnetz/Netz-Schnittstellen- bzw. PNNI-Protokoll und integrierte lokale Managementschnittstellen- bzw. ILMI-Funktionen ausführt, **dadurch gekennzeichnet, dass** das Netzelement (108) so ausgelegt ist, dass es eine separate Zeitperiode für jeden einzelnen der ATM-Knoten (102-106), die mit dem Netzelement (108) verbunden sind, zuweist und die Signalisierung und Leitweglenkung für jeden einzelnen der verbundenen ATM-Knoten (102-106) während der zugewiesenen Zeitperioden ausführt.

2. Netz (100) nach Anspruch 1, wobei das Netzelement (108) ferner so ausgelegt ist, dass es ATM-Netz-Netz-Schnittstellen- bzw. AINI-Funktionen für die ATM-Knoten (102-106) ausführt.

3. Netz (100) nach Anspruch 1 oder 2, wobei das Netzelement (108) mit den ATM-Knoten (102-106) verbunden ist, und jeder einzelne der ATM-Koten (102-106) durch mindestens einen virtuellen Pfad (116-120) mit dem Netzelement verbunden ist.

4. Netz (100) nach Anspruch 3, wobei die Verbindung (116-120) eine Inband-Verbindung ist.

5. Netz (100) nach Anspruch 3, wobei die Verbindung (116-120) eine Outband-Verbindung ist.

6. Netz (100) nach Anspruch 1, wobei das Netzelement (108) ferner so ausgelegt ist, dass es ILMI-Funktionen für jeden einzelnen der verbundenen ATM-Knoten (102-106) während der zugewiesenen Zeitperioden ausführt.

7. Netz (100) nach Anspruch 1 oder 6, wobei das Netzelement (108) ferner so ausgelegt ist, dass es AINI-Funktionen für jeden einzelnen der verbundenen ATM-Knoten (102-106) während der zugewiesenen Zeitperioden ausführt.

8. Netz (100) nach einem der vorhergehenden Ansprüche, wobei das Netzelement (108) eine PNNI-Instanz (110-114) für je einen ATM-Knoten umfasst.

9. Netz (100) nach Anspruch 8, wobei die eine PNNI-Instanz eine Leitwegtabelle und eine Tabelle umfasst, die Signalisierungseinträge speichert, die virtuelle Pfade für den einen ATM-Knoten (102-106) darstellen.

10. Netz (100) nach einem der vorhergehenden Ansprüche, das so ausgelegt ist, dass es Kommunikation zwischen dem Netzelement (108) und den ATM-Knoten (102-106) über das einfache Netzmanagementprotokoll bzw. SNMP oder das Corba-Protokoll oder das QD2-Protokoll ausführt.

11. Netz (100) nach einem der vorhergehenden Ansprüche, wobei die ATM-Knoten (102-107) ATM-Switches (302, 308) umfassen.

12. Netzelement (108) zur Verwerdung in einem Metz (100) mit asynchronem Transfermodus ATM, umfassend Mittel zur Überwachung und Kontrolle (322-324) des Netzelements (108), wobei das Netzelement (108) so ausgelegt ist, das es für ATM-Knoten (102-106) des ATM-Netzes (100) Signalisierung und Leitweglenkung gemäß dem Privatnetz-Netz-Schnittstellen- bzw. PNNI-Protokoll und integrierte lokale Managementschnittstellen- bzw . I L M I-Funktionen ausführt, und ferner **dadurch gekennzeichnet ist, dass** es so ausgelegt ist, dass es eine separate Zeitperiode für jeden einzelnen der ATM-Knoten (102-106), die mit dem Netzelement (108) verbunden sind, zuweist und die Signalisierung und Leitweglenkung für jeden einzelnen der verbundenen ATM-Knoten (102 106) während der zugewiesenen Zeitperioden ausführt.

13. Netzelement (108) nach Anspruch 12, das ferner so ausgelegt ist, dass es ATM-Netz-Netz-Schnittstellen- bzw. AINI-Funktionen für die ATM-Knoten (102-106) ausführt.

14. Netzelement (108) nach Anspruch 12 oder 13, das so ausgelegt ist, dass es Verbindungen mit den ATM-Knoten (102-106) aufbaut, wobei jeder einzelne der ATM-Knoten (102-106) durch mindestens einen virtuellen Pfad mit dem Netzelement verbunden ist.

15. Netzelement (108) nach Anspruch 14, wobei die Verbindung (116-120) eine Inband-Verbindung ist.

16. Netzelement (108) nach Anspruch 14, wobei die Verbindung (116-120) eine Outband-Verbindung ist.

17. Netzelement (108) nach Anspruch 12, das ferner so ausgelegt ist, dass es ILMI-Funktionen für jeden einzelnen der verbundenen ATM-Knoten (102-106) während der zugewiesenen Zeitperioden ausführt.

18. Netzelement (108) nach Anspruch 12, das ferner so ausgelegt ist, dass es AINI-Funktionen für jeden einzelnen der verbundenen ATM-Knoten (102-106) während der zugewiesenen Zeitperioden ausführt.

19. Netzelement (108) nach einem der vorhergehenden Ansprüche 12 bis 18, umfassend eine PNNI-Instanz (110-114) für je einen ATM-Knoten.

20. Netzelement (108) nach Anspruch 19, wobei die eine PNNI-Instanz (110-114) eine Leitwegtabelle und eine Tabelle umfasst, die Signalisierungseinträge speichert, die virtuelle Pfade für den einen ATM-Knoten darstellen.

21. Netzelement (108) nach einem der Ansprüche 12 bis 20, das so ausgelegt ist, dass es Kommunikation mit den ATM-Knoten (102-106) über das SNMP-Protokoll oder das Corba-Protokoll oder das QD2-Protokoll ausführt.

22. Verfahren zum Betreiben eines Netzes (100) mit asynchronem Transfermodus ATM, umfassend mindestens einen ATM-Knoten (102-106) und mindestens ein Netzelement (108), wobei das Netzelement (108) eine Privatnetz-Netz-Schnittstellen- bzw. PNNI-Instanz (110-114) mit einer Leitwegtabelle und einer Tabelle umfasst, die Signalisierungseinträge speichert, die virtuelle Pfade für jeden einzelnen der ATM-Knoten (102-106) darstellen, die mit dem Netzelement (108) durch einen virtuellen Pfad (116-120) verbunden sind, wobei das Verfahren die folgenden Schritte umfasst:
- Umschalten eines virtuellen Kanals VC5 von einem ersten ATM-Knoten (102) zum Netzelement (108);
- Umschalten von virtuellen Kanälen VC16 und VC18 von einem ersten ATM-Knoten (102) zum Netzelement (108);
- Bestimmen des Status von ATM-Nachbarnoten (104) am anderen Ende einer physikalischen Verbindung Vom ersten ATM-Knoten (102) mit den ATM-Nachbarknoten (104) und Aushandeln eines gemeinsamen Satzes von Betriebsparametern gemäß **dem integrierten lokalen** Managementschnittstellen- bzw. ILMI-Protokoll;
- Ausführen von Signalisierung und Leitweglenkung für den ersten ATM-Knoten (102) durch eine erste PNNI-Instanz (110) des Netzelements (108), wobei die erste PNNI-Instanz (110) dem ersten ATM-Knoten (102) zugeordnet ist, wobei eine separate Zeitperiode für jeden einzelnen der ATM-Knoten, die mit dem Netzelement verbunden sind, zugewiesen wird und die Signalisierung und die Leitweglenkung für jeden einzelnen der verbundenen ATM-Knoten während der zugewiesenen Zeitperioden ausgeführt werden;
- Beenden einer Verbindung von virtuellen Kanälen VC5 und VC18 zwischen dem ersten ATM-Knoten (102) und dem Netzelement (108).

23. Verfahren nach Anspruch 22, ferner umfassend den Schritt des Ausführens Von ATM-Netz-Netz-Schnittstellen- bzw. AINI-Funktionen für den ersten ATM-Knoten (102) durch das Netzelement.

24. Verfahren nach Anspruch 22 oder 23, wobei die Schritte für eden einzelnen der ATM-Knoten, die mit dem Netzelement (108) verbunden sind, in einer Reihum-Weise wiederholt werden.

25. Verfahren nach einem der Ansprüche 22 bis 24, wobei Kommunikation zwischen dem Netzelement (108) und dem ersten ATM (102)-Switch über das einfache Netzmanagementprotokoll bzw. SNMP oder das Corba-Protokoll oder das QD2-Protokoll ausgeführt wird.

26. Verfahren nach einem der Ansprüche 22 bis 24, wobei die Schritte für jeden einzelnen der ATM-Knoten (102-106), die mit dem Netzelement (108) verbunden sind, wiederholt werden.

## Revendications

1. Réseau (100) à mode de transfert asynchrone, ATM, comprenant au moins un noeud ATM (102-106) et au moins un élément de réseau (108), dans lequel ledit élément de réseau est adapté pour effectuer pour lesdits noeuds ATM (102-106) une signalisation et un routage conformément à des fonctions d'interface de gestion locale intégrée, ILMI, et de protocole d'interface réseau - réseau privé, PNNI, **caractérisé en ce que** ledit élément de réseau (108) est adapté pour allouer une période de temps séparée pour chacun desdits noeuds ATM (102-106) connectés audit élément de réseau (108) et pour effectuer ladite signalisation et ledit routage pour chacun desdits noeuds ATM connectés (102-106) pendant lesdites périodes de temps allouées.

2. Réseau (100)selon la revendication 1, dans lequel ledit élément de réseau (108) est en outre adapté pour mettre en oeuvre des fonctions d'interface réseau - inter ATM pour lesdits noeuds ATM (102-106).

3. Réseau (100) selon la revendication 1 ou 2, dans lequel ledit élément de réseau (108) est connecté auxdits noeuds ATM (102-106) et chacun desdits noeuds ATM (102-106) est connecté audit élément de réseau au moyen d'au moins un conduit virtuel (116-120).

4. Réseau (100) selon la revendication 3, dans lequel ladite connexion (116-120) est une connexion dans la bande.

5. Réseau (100) selon la revendication 3, dans lequel ladite connexion (116-120) est une connexion hors bande.

6. Réseau (100) selon la revendication 1, dans lequel ledit élément de réseau (108) est en outre adapté pour mettre en oeuvre des fonctions ILMI pour chacun desdits noeuds ATM connectés (102-106) pendant lesdites périodes de temps allouées.

7. Réseau (100) selon la revendication 1 ou 6, dans lequel ledit élément de réseau (108) est en outre adapté pour mettre en oeuvre des fonctions AINI pour chacun desdits noeuds ATM connectés (102-106) pendant lesdites périodes de temps allouées.

8. Réseau (100) selon une quelconque des revendications précédentes, dans lequel l'élément de réseau (108) comprend une instance PNNI (110-114) par noeud ATM.

9. Réseau (100) selon la revendication 8, dans lequel ladite une instance PNNI comprend une table de routage et une table mémorisant des entrées de signalisation représentant des conduits virtuels pour ledit un noeud ATM (102-106).

10. Réseau (100) selon une quelconque des revendications précédentes adapté pour effectuer une communication entre ledit élément de réseau (108) et lesdits noeuds ATM (102-106) via un protocole de gestion de réseau simple, SNMP, ou un protocole Corba ou un protocole QD2.

11. Réseau (100) selon une quelconque des revendications précédentes, dans lequel lesdits noeuds ATM (102-107) comprend des commutateurs ATM (302,308).

12. Elément de réseau (108) à utiliser dans un réseau à mode de transfert asynchrone, ATM, (100) comprenant un moyen de supervision et contrôle (322,324) dudit élément de réseau (108), dans lequel ledit élément de réseau (108) est adapté pour effectuer pour les noeuds ATM (102-106) dudit réseau ATM (100) une signalisation et un routage conformément à des fonctions d'interface de gestion locale intégrée, ILMI, et de protocole d'interface réseau - réseau privé, PNNI, et en outre caractérisé afin d'être adapté pour allouer une période de temps séparée pour chacun desdits noeuds ATM (102-106) connectés audit élément de réseau (108) et pour effectuer ladite signalisation et ledit routage pour chacun desdits noeuds ATM connectés (102-106) pendant lesdites périodes de temps allouées.

13. Elément de réseau (108) selon la revendication 12 adapté en outre afin de mettre en oeuvre des fonctions d'interface réseau-inter ATM, AINI, pour lesdits noeuds ATM (102-106).

14. Elément de réseau (108) selon la revendication 12 ou 13 adapté pour établir des connexions (116-120) vers lesdits noeuds ATM (102-106), dans lequel chacun desdits noeuds ATM (102-106) est connecté audit élément de réseau au moyen d'au moins un conduit virtuel.

15. Elément de réseau (108) selon la revendication 14, dans lequel ladite connexion (116-120) est une connexion dans la bande.

16. Elément de réseau (108) selon la revendication 14, dans lequel ladite connexion (116-120) est une connexion hors bande.

17. Elément de réseau (108) selon la revendication 12, adapté en outre afin de mettre en oeuvre des fonctions ILMI pour chacun desdits noeuds ATM connectés (102-106) pendant lesdites périodes de temps allouées.

18. Elément de réseau (108) selon la revendication 12, adapté en outre afin de mettre en oeuvre des fonctions AINI pour chacun desdits noeuds ATM connectés (102-106) pendant lesdites périodes de temps allouées.

19. Elément de réseau (108) selon une quelconque des revendications 12 à 18, comprenant une instance PNNI (110-114) par noeud ATM.

20. Elément de réseau (108) selon la revendication 19, dans lequel une instance PNNI (110-114) comprend une table de routage et une table mémorisant des entrées de signalisation représentant des conduits virtuels pour ledit un noeud ATM.

21. Elément de réseau (108) selon une quelconque des revendications 12 à 20 adapté pour effectuer une communication avec lesdits noeuds ATM (102-106) via un protocole SNP ou un protocole Corba ou un protocole QD2.

22. Procédé de fonctionnement d'un réseau à mode de transfert asynchrone, ATM, (100) comprenant au moins un noeud ATM (102-106) et au moins un élément de réseau (108) et ledit élément de réseau comprend une instance d'interface réseau - réseau privé, PNNI, (110-114) avec une table de routage et une table mémorisant des entrées de signalisation représentant des conduits virtuels pour chaque noeud ATM (102-106) connecté audit élément de réseau (108) au moyen d'un conduit virtuel (116-120), ledit procédé comprenant les étapes suivantes consistant à :
• commuter un canal virtuel VC5 d'un premier noeud ATM (102) audit élément de réseau (108) ;
• commuter des canaux virtuels VC16 et VC18 dudit premier noeud ATM (102) audit élément de réseau (108) ;
• déterminer un statut de noeuds ATM voisins (104) à l'autre extrémité d'une liaison physique dudit premier noeud ATM (102) auxdits noeuds ATM voisins (104) et pour négocier un ensemble commun de paramètres opérationnels conformément au protocole d'interface de gestion locale intégrée, ILMI ;
• effectuer une signalisation et un routage pour ledit premier noeud ATM (102) par une première instance PNNI (110) dudit élément de réseau (108), dans lequel ladite première instance PNNI (110) est assignée audit premier noeud ATM (102), dans lequel une période de temps séparée est allouée pour chacun desdits noeuds ATM connectés audit élément de réseau et ladite signalisation et ledit routage est effectué pour chacun desdits noeuds ATM connectés pendant lesdites périodes de temps allouées ;
• mettre fin à une connexion d'un canal virtuel VC5 et VC18entre ledit premier noeud ATM (102) et ledit élément de réseau (108).

23. Procédé selon la revendication 22, comprenant en outre l'étape de mise en oeuvre de fonctions d'interface réseau - inter ATM, AINI, pour ledit premier noeud ATM (102) par ledit élément de réseau.

24. Procédé selon la revendication 22 ou 23, dans lequel lesdites étapes sont répétées pour chacun desdits noeuds ATM connectés audit élément de réseau (108) à la manière round-robin.

25. Procédé selon une quelconque des revendications 22 à 24, dans lequel la communication entre ledit élément de réseau (108) et ledit premier commutateur ATM (102) est effectuée via un protocole de gestion de réseau simple, SNMP, ou un protocole Corba ou un protocole QD2.

26. Procédé selon une quelconque des revendications 22 à 24, dans lequel lesdites étapes sont répétées pour chacun desdits noeuds ATM (102-106) connectés audit élément de réseau (108).
